**Europäisches Patentamt**

**European Patent Office**

**Office européen des brevets**

(11) Veröffentlichungsnummer: **0 290 631 B1**

(12) # EUROPÄISCHE PATENTSCHRIFT

(45) Veröffentlichungstag der Patentschrift: **10.03.93**

(51) Int. Cl.5: **A01K 47/00**

(21) Anmeldenummer: **88900266.3**

(22) Anmeldetag: **01.12.87**

(86) Internationale Anmeldenummer:
**PCT/SU87/00140**

(87) Internationale Veröffentlichungsnummer:
**WO 88/04138 (16.06.88 88/13)**

(54) **ZUCHTVERFAHREN VON BIENENFAMILIEN.**

(30) Priorität: **02.12.86 SU 4193028**

(43) Veröffentlichungstag der Anmeldung:
**17.11.88 Patentblatt 88/46**

(45) Bekanntmachung des Hinweises auf die
Patenterteilung:
**10.03.93 Patentblatt 93/10**

(84) Benannte Vertragsstaaten:
**AT CH DE FR LI SE**

(56) Entgegenhaltungen:
**DE-C- 80 161**

**A. I. and E. P. Ruta "Entsiklopedia pchelo-vodstva" 1927, Mysl, (Leningrad) see pages 702,703**

**P. S. Scherbina "Pchelovodstvo", 1956, Gosudarstvennoe izdatelstvo selskokhozyaist-vennoi literatury, (Moscow), see pages 217-218**

**A. Malaju "Intensifikatsia proizvodstva**

meda", 1979, Kolos, Moscow, see pages 157-159

(73) Patentinhaber: **AEGVIIDUSKY LESKHOZ**
**ul. Kalda, 1**
**Kharjusky raion, pos. Aegviidu, 202230(SU)**

(72) Erfinder: **RAAVA, Andres Erikhovich**
**Mustamyae tee, 141-62**
**Tallin, 200033(SU)**

(74) Vertreter: **Finck, Dieter et al**
**Patentanwälte v. Füner, Ebbinghaus, Finck**
**Mariahilfplatz 2 & 3**
**W-8000 München 90 (DE)**

## Beschreibung

Die Erfindung betrifft ein Verfahren zur Bienenhaltung, das die frühjahrsmäßige Herausbildung eines Bienenschwarmes an Rähmchen mit leeren Honigwaben zur Erhaltung einer Brut und das mehrmalige Erweitern des Brutraumes des Bienenschwarmes in der Zeit der Honigernte mittels Einführung von zusätzlichen Rähmchen mit leeren Honigwaben vorsieht,

Gegenwärtig sind in der Praxis verschiedene Verfahren zur Honiggewinnung bekannt, die auf der konventionellen Technologie der Bienenhaltung beruhen. Diese Technologien können in zwei Gruppen je nach der Ausrichtung der Erweiterung eines Bienennestes eingeteilt werden. Zu einer Gruppe, in der die Erweiterung des Nestes in horizontaler Richtung erfolgt, gehören Verfahren zur Bienenhaltung in liegenden Bienenstöcken.

Zu der anderen Gruppe, in der die Erweiterung des Nestes in vertikaler Richtung erfolgt, gehören Verfahren zur Bienenhaltung in vertikalen Bienenstöcken, der sogenannten Gehausewohnungen.

In der Praxis sind verschiedene Verfahren zur Bienenhaltung in Kastenwohnungen unterschiedlicher Konstruktionen mit standardisierten Nesträhmchen bekannt.

Alle diese Verfahren beruhen auf der konventionellen Technologie der Schaffung der besten Bedingungen für die Entwicklung eines Bienenvolkes mit dem Ziel der Gewinnung hoher Honigernte.

Bekannt ist, beispielsweise, ein Verfahren zur Bienenhaltung in liegenden Bienenstöcken mit Nesträhmchen mit Abmessungen 435x300 mm.

Bei diesem Verfahren werden die Bienenschwärme beim Eintritt des Frühlings mit reichlichem Futter versorgt. Zu dem Zeitpunkt, wenn die Königin Eier in der vorletzten Wabenzelle legen wird, wird das Nest in horizontaler Richtung mit ausgebauten Wabenzellen erweitert. Beim Einbringen von Nektar wird das Nest im weiteren in horizontaler Richtung mit Rähmchen mit leeren Honigwaben erweitert. Bei günstigen Bedingungen kann man gleichzeitig zwei Rähmchen aufstellen, indem man aus dem Bienenstock eine ausgebaute Wabenzolle entfernt. Die fortgenommenen Rähmchen mit ausgebauten Wabenzellen werden bis zum Eintritt der Haupthonigernte aufbewahrt beziehungsweise in einem Ableger verwendet, der in einigen Fällen zur Verhinderung des Ausschwärmens der Bienen ausgebildet wird, der, beispielsweise, bei verzögerter Erweiterung des Nestes eintreten kann. In Abhängigkeit von den lokalen Bedingungen werden bei diesem Verfahren noch die Umgruppierung der Rähmchen, die Aufstellung von Ansatzstücken und andere Techniken zur Verhinderung der Ausschwärmung von Bienen angewendet.

Dieses Verfahrens hat eine hohe Arbeitsaufwendigkeit infolge eines geringen Umfanges der einmaligen Erweiterung des Nestes.

Bekannt ist ferner ein Verfahren zur Bienenhaltung in Mehrkasten-Zahnrähmchen-Bienenstöcken mit Ansatzstücken, oder in einem Etagenbienenstock gemäß DE-80 161 C.

Im Frühling nach der Überwinterung werden die Bienenvölker in einem Gehäuse solange gehalten, bis alle 10 Rähmchen mit Bienen besiedelt werden. Dann wird ein zweites Gehäuse mit honigarmen ausgebauten Wabenzellen und mit einigen Rähmchen mit leeren Honigwaben eingesetzt. Nach der Besiedlung des zweiten Gehäuses mit dem Bienenvolk werden die Rähmchen mit Brut ausgefüllt und es wird die Umstellung der Gehäuse vorgenommen. Innerhalb einer Saison führt man mehrere solche Umstellungen durch. Je nach Vergrößerung der Anzahl der Bienen im Bienenstock wird auf das zweite Gehäuse ein Ansatzstück mit Halbrähmchen aufgestellt. Dabei soll mindestens die Hälfte der Halbrähmchen leere Honigwaben und die übrige Hälfte ausgebaute Wabenzellen aufweisen. Das zweite Ansatzstück wird nach der Besiedlung des ersten Ansatzstückes mit Bienenvolk aufgestellt. Für eine erneute Erweiterung des Nestes wird auf das zweite Ansatzstück ein drittes aufgestellt. Gleichzeitig mit der Montage des zweiten und des dritten Ansatzstückes erfolgt der Platzwechsel der Gehäuse.

Dieses Verfahren hat eine niedrige Nutzung der potentiellen Wachsabsonderung eines Bienenvolkes infolge einer geringen Zerstörung der Kompaktheit eines Brutnestes und infolge einer geringen Versorgung mit Ersatzwabenzellen, die in einer beträchtlichen Anzahl gebräucht werden.

Bekannt ist schließlich noch ein Verfahren zur Bienenhaltung in Mehrgehäuse-Bienenstöcken mit Rähmchen 435x230 mm. (N.L.Burenin, G.N.Kotova "Spravochnik po pchelovodstvu" Moskau, Verlag "Kolos", 1984, S.S.29-32; S.S. 93-96).

Das Bienenvolk überwintert in einem Bienenstock mit zwei Gehäusen. In den ersten Frühlingstagen wird der Boden des Bienenstockes durch einen sauberen ausgewechselt. Gleichzeitig erfolgt die Durchsicht des Bienenachwarmens.Wenn ein Bienenschwarm während der Überwinterungszeit schwächer wurde, wird für diesen ein oberes Gehäuse belassen. Bei einer Verschimmelung der Waben des unteren Gehäuses eines starken Bienenschwarmes wird das Gehäuse durch ein neues mit Futterrähmchen ausgewechselt. Beim Eintritt stabiler warmer Witterungsbedingungen und bei Besetzung des größten Teils der Rähmchen des oberen Gehäuses mit Brut wird die Platzanordnung der Gehäuse ausgetauscht. Aus dem unteren Gehäuse werden einige leeren Waben entfernt und man tauscht diese gegen Rähmchen mit leeren Honigwaben aus. Im weiteren werden die Gehäuse ungefähr in 10 bis 12 Tagen wieder platzmäßig getauscht. Diese Techniken werden vorgenommen, um die Menge der Brut zu erhöhen und das jeweilige Bienenvolks zu verstärken. Die dritte Umstellung der Gehäuse führt man zusammen mit der Vergrößerung des Umfanges der Nester durch. Bei der Umstellung der zwei unteren Gehäuse stellt man auf diese oben ein drittes, das aus fünf bis sechs Rähmchen mit leeren Honigwaben und aus vier bis fünf Rähmchen mit ausgebauten Waben an den Rändern komplettiert wird. Wenn ein Bienenschwarm in einem Gehäuse belassen wird, wird dann zur Vergrößerung des Umfanges des Nestes das zweite Gehäuse mit honigarmen Waben nach unten gestellt. Wenn bei der Aufstellung des dritten Gehäuses im Bienenschwarm Anzeichen für ein Ausschwärmen nachgewiesen werden, wird das dritte Gehäuse zwischen den Brutgehäusen aufgestellt. Es gibt jedoch Fälle, in welchen diese Maßnahme infolge ungünstiger metereologischer Bedingungen nicht angewendet werden kann, weil die Bienen das aufgestellte Gehäuse nicht besiedeln. Dann werden andere Maßnahmen getroffen.

Bei günstigen Bedingungen der Honigernte wird in 3 bis 4 Tagen nach der Aufstellung des dritten Gehäuses das vierte Gehäuse hauptsächlich mit Rähmchen mit leeren Honigwaben komplettiert und die Gehäusen werden gleichzeitig platzmäßig getauscht. Auf den Boden des Bienenstockes stellt man das dritte Gehäuse mit unverdeckelter Brut und einen Weisel auf, darauf stellt, man das erste Gehäuse mit verdeckelter Brut, darauf das neue vierte Gehäuse mit leeren Honigwaben und ganz oben drauf stellt man das zweite Gehäuse mit den brutfreien Waben. Am Ende der letzten Honigernte werden die Honiggehäuse vom Bienenstock abgenommen. Die Bienen bilden üblicherweise in zwei unteren Gehäusen in den leeren Wabenzellen eine Bruttraube. Bei der endgültigen Montage eines Nestes werden für die Überwinterung nicht mehr als zwei Gehäuse gelassen. Hierfür wird auf den Ersatzboden ein mittleres Gehäuse aufgestellt, darauf stellt man ein Honiggehäuse mit ungefähr 25 kg Honig. Dabei werden im Honiggehäuse zwei Waben mit Pollenwaben ausgetauscht. Das ganz unten liegende Gehäuse wird entfernt und die übriggebliebenen Bienen werden mit Rauch vertrieben.

Die obenbeschriebenen Verfahren haben eine niedrige Austauschbarkeit von Nestwaben (nicht über 60%), erfordern ausgebaute Ersatzwaben, eine ständige Kontrolle des Zustandes des Bienenschwarmes, viele zusätzlichen Techniken für die Unterhaltung des Arbeitstriebes des Bienenvolkes sowie Techniken für die Schwarmvorbeuge, die Herausbildung von zeitweiligen Ablegern, Aufwendungen für die Entseuchung und Aufbewahrung von Ersatzwaben und eine Prophylaxe für die Verbreitung von Bakterien- und Invasionserkrankungen des Bienenvolkes, Es fehlt eine Steuerbarkeit der Lebenstägigkeit eines Bienenvolkes.

Der Erfindung liegt die Aufgabe zugrunde, das Verfahren zur Bienenhaltung der eingangsgenannten Art so auszugestalten, daß eine Erhöhung der Honigleistung durch Veränderung der Technologie der Bienenhaltung in der Periode der aktiven Lebenstätigkeit möglich ist.

Die gestellte Aufgabe wird dadurch gelöst, daß ausgehend von dem gattungsgemäßen Verfahren zur Bienenhaltung, erfindungsgemäß, die Brut vor der Einführung der zusätzlichen Rähmchen mit leeren Honigwaben in den Bienenschwarm gleichzeitig an allen Waben in ihrem zentralen Teil in der Vertikalen in zwei Teile getrennt wird, und die zusätzlichen Rähmchen mit leeren Honigwaben zwischen den getrennten Teilen der Brut eingeführt werden, wobei jedes einzelne Erweitern des Bienenschwarmes 0,25 bis 0,35 Teile des Gesamtumfangs des Brutraumes beträgt.

Durch das erfindungsgemäße Verfahrens wird die Art und Weise der Bienenhaltung während ihrer aktiven Lebenstätigkeit mit maximal möglicher Gewinnung der Produkte der Bienenzucht bestimmt.

Aus der Biologie eines Bienenschwarmes ist bekannt, daß ein Bienenvolk unter den natürlichen Bedingungen seinem Nest die Form einer Kugel mit maximaler Kompaktheit verleiht. Eine solche Form ist optimal für die Gewährleistung minimaler Wärmeverluste von der Außenoberfläche des jeweiligen Nestes.

Auf der Grundlage der Biologie eines Bienenschwarmes schwankt der Durchmesser eines solchen kugelförmigen Nestes, das aus Wabenzellen mit Brut besteht, von denen maximal etwa 50000 Stück vorhanden sein können, bei den reinen frischausgebauten Waben in einem Bereich von 240 bis 360 mm. Für die Anbringung einer solchen Bienentraube ist ein Nestkasten in Form eines Würfels, dessen Seitenlänge von 320 bis 420 mm beträgt, am optimalsten.

Unter den Bedingungen, bei denen eine normale Lebenstätigkeit eines Bienenschwarms gesichert wird, können die Bienen Wachs für die Absicherung der Kompaktheit des Nestes absondern. Bekannt ist ebenfalls, daß die Zerstörung der Kompaktheit des Nestes die Erhöhung der aktiven Lebenstätigkeit des Bienenvolkes um so mehr fördert, je näher zum Zentrum des Nestes die Kompaktheit zerstört wird. Neben der Zerstörung der Kompaktheit erhöht sich auch die Eilegeleistung der Weisel bis zur Wiederstellung der Kompaktheit. Bekannt ist weiterhin, daß die Weisel Eier im Zentrum des Nestes gerne legt.

Ausgehend davon, ist es am zweckmäßigsten, die Erhöhung des Arbeitstriebes eines Bienenvolkes mittels Zerstörung der Kompaktheit des Nestes mit der gleichzeitigen Trennung der Brut an allen Waben in zwei Teile in seinem zentralen Teil in der Vertikalen zu iniziieren.

Nach der Trennung wird in den entstandenen Raum eine entsprechende Anzahl von zusätzlichen Rähmchen mit leeren Honigwaben für die Gewährleistung besonders günstigen Eilegebedingungen für die Weisel im Zentrum des Brutnestes mit zerstörter Kompaktheit eingeführt.

Das Erweitern in einem Umfang von 0,25 bis 0,35 Teilen, bezogen auf den Gesamtumfang des Brutnestes, bewirkt die Wiederherstellung der Kompaktheit des Nesstes vor dem Austritt der Brut aus den geteilten Teilen des Nestes und gewährleistet das Anbringen des Zentrums des Nestes an den Waben, die in den Brutraum eingeführt wurden, der bei der Trennung der Brut im zentralen Teil entsteht und dadurch die Möglichkeit der wiederholten Trennung der Brut in ihrem zentralen Teil gewährleistet.

Von der Praxis wurde bestätigt, daß die einzelne Erweiterung im Umfang von 0,25 bis 0,35 Teilen, bezogen auf den Gesamtumfang des Brutnestes, dem entsprechend die Einführung einer zusätzlichen Anzahl von Wabenrähmchen gewährleistet, wobei die Wabenfläche (S) eines solchen Rähmchens folgender Formel entspricht

$$S = \frac{2450 \text{ bis } 3525}{Z},$$

wobei
Z -
die Anzahl der Wabenzellen an beiden Seiten einer Einheit der Wabenfläche und
2450 bis 3525 -
empirisch ermittelte Grenzwerte sind.

Durch eine regelmäßige Durchführung dieser Technik der Erweiterung eines Bienenbrutraumes kann man das Verfahren zur Bienenhaltung mit ständig zerstörten Kompaktheit des Brutraumes realisieren.

Die Anwendung des erfindungsgemäßen Verfahrens zur Bienenhaltung unter gleichen Bedingungen der Honigernte erhöht die Leistung des Warenhonigs auf das 1,2 bis 5fache und die Leistung des Warenwachses auf das 2,5 bis 12fache im Vergleich zu den gegenwärtig bekannten Verfahren der Bienenhaltung und vereinfacht die Bienenpflege.

In Abhängigkeit von der konkret ausgewählten Wabenfläche (S) eines Rähmchens überwintert ein Bienenschwarm in dem würfelartigen Nest, das aus drei beziehungsweise aus vier Etagen von Rähmchen mit Waben besteht. Nach dem Frühjahrsflug zu Beginn der aktiven Periode der Lebenstätigkeit eines Bienenschwarmes wird der Boden des Brutraumes zur Reinigung des Nestes durch einen reinen Boden ausgewechselt.

Zu gleicher Zeit wird die unterste Etage der Rähmchen mit Waben auf den oberen Teil des Bienenstockes umgestellt. Wenn ein Bienenschwarm während der Überwinterungszeit schwächer wurde, wird die untere Etage der Räumchen mit Waben zur Schaffung eines Raummangels entfernt und diese Etage wird dann nur zu Beginn der Trachtperiode oben aufgestellt.

Mit Beginn der Trachtperiode beginnt man mit dem mehrmaligen Erweitern des Brutraumes in der Vertikalen vom Zentrum in zwei Teile und mit der Einführung zusätzlicher Rähmchen mit leeren Honigwaben.

Nach dem ersten Erweitern des Nestes beginnt man, den Bienenschwarm in dem Zustand einer ständig zerstörten Kompaktheit zu halten, um die Nestwaben teilweise auszutauschen, die Verbreitung von Erkrankungen auszuschließen, die Entstehung eines Ausschwärmungszustandes der Bienen zu beseitigen sowie um eine Brut zur Stärkung eines Bienenschwarmes und seiner Vermehrung zu erzielen.

Im weiteren werden solche Erweiterungen des Nestes mit einer Regelmäßigkeit wiederholt, die durch die Wiederherstellung seiner Kompaktheit durch die Bienen gewährleistet wird. Erforderlichenfalls werden gleichzeitig aus dem Nest die ganz unten angebrachten Etagen der Rähmchen mit Waben, die sich von der Brut befreit haben, und die ganz oben angebrachten Etagen mit den Rähmchen, die vollständig mit Honig ausgefüllten Zellen aufweisen, entfernt. Das ist erforderlich, um den gesamten Umfang des Nestes zu optimieren, das heißt, um es im zentralen Teil zu konzentrieren.

In Abhängigkeit vom Charakter der Honigernte, wird in dem Fall, in welchem es für die Unterbringung von Honig an Waben mangelt, die bei der Wiederherstellung der Kompaktheit des Brutraumes ausgebaut wurden, der letztere zusätzlich unmittelbar über der Brut in vertikaler Richtung erweitert. Hierfür werden Etagen (je eine) der zusätzlichen Rähmchen mit leeren Honigwaben beziehungsweise die früher entfernten Etagen vom unteren Teil des Bienenstockes mit ausgebauten Waben eingeführt. Als Grundlage für dieses zusätzliche Erweitern dienen das Gewicht des Honigs, der in einer der Etagen untergebracht ist, und die Zunahme des Gewichts des Nestes gemäß Anzeige einer Kontrollwage.

Nach der Haupthonigernte werden die Etagen mit Honig vom Bienenstock bis zum oberen Stand des Brutraumes abgenommen. Im weiteren wird während der Versorgung der Bienenvölker mit einem Vorrat an Futter für die Überwinterung, der für die Dauer der Überwinterung von 180 bis 200 Tagen 10 bis 12 kg beträgt, das Erweitern im zentralen Teil des Brutraumes mit der gleichzeitigen Einführung von Rähmchen mit leeren Honigwaben zwischen die getrennten Teilen des Brutraumes fortgeführt.

Wenn die Außentemperatur so niedrig wird, daß sich die Bienenvolker zu einer Bienentraube für die Überwinterung zusammendrängen, werden aus dem Nest die unteren Etagen der Rähmchen mit Waben, die mit Bienen nicht besetzt sind, entfernt um die würfelförmige Form des Nestes während der Überwinterung der Bienen zu gewährleisten. Nach der Beendigung der Überwinterung der Bienen, wird der Zyklus wiederholt. Anhand von Beispielen wird das beschriebene Verfahrens weiter erläutert.

**Beispiel 1**

Ein Bienenschwarm wird unter natürlichen Klimabedingungen gehalten, wenn bei einer Dauer der Trachtperiode von 120 Tagen die metereologischen Bedingungen und die Trachtbedingungen dermaßen ungünstig sind, daß sie lediglich die Aufrechterhaltung des Bienenschwarmes gewährleisten. Dabei wird die Honigernte für die Überwinterung und für die Gewinnung des Warenhonigs nicht gewährleistet. Für die Haltung eines Bienenschwarmes werden Rähmchen eingesetzt, von denen jedes eine Wabenfläche hat, die folgender Formel entspricht:

$$S = \frac{2450}{Z} \,,$$

und die ein einmaliges Erweitern des Bienennestes um 0,25 Teile seines Umfanges gewährleisten. Der Bienenschwarm besetzt nach der Überwinterung ein Nest, das aus vier Etagen von Rähmchen besteht. Zum Ausfüllen der Rähmchen einer Etage mit Wachs werden 0,18 kg leere Honigwaben gebraucht. Nach Ausbau der neuen Waben beträgt das Gesamtgewicht einer Etage 0,36 kg. Der Ausbau der Waben während der Wiederherstellung der Kompaktheit des Nestes dauert 9 bis 10 Tage. Hierdurch werden innerhalb von 120 Tagen der Trachtperiode 12 Erweiterungen des Nestes durchgeführt. Das Bienenvolk baut 12 Etagen der Rähmchen mit leeren Honigwaben aus und produziert 2,16 kg Wachs. Am Ende der Periode der aktiven Lebenstätigkeit wird der Bienenschwarm mit zusätzlichem Futter in Form von Zuckersirup als Futtervorrat für die Überwinterung versorgt. Da für die Überwinterung vier Etagen von Rähmchen erforderlich sind, die Bienen jedoch 12 Etagen ausgebaut haben, beträgt die Austauschbarkeit der Nestwaben 300%. Die Waben der entfernten Etagen werden zu Warenwachs verarbeitet. Man erhält etwa 4,3 kg.

**Beispiel 2**

Ein Bienenschwarm wird unter den natürlichen Klimabedingungen, die in Beispiel 1 angeführt sind, gehalten. Für die Haltung des Bienenschwarmes werden Rähmchen eingesetzt, deren Wabenfläche jeweils folgender Formel entspricht:

$$S = \frac{3525}{Z} \,,$$

und die das einmalige Erweitern des Bienennestes um 0,35 Teile seines Umfanges bewirken. Der Bienenschwarm besetzt nach der Überwinterung an solchen Rähmchen ein Nest, das sich aus drei Etagen zusammensetzt. Zum Ausfüllen mit Wachs einer solchen Etage werden 0,22 kg leere Honigwaben gebraucht. Nach dem Ausbau der neuen Waben beträgt das Gesamtgewicht der Etage 0,44 kg. Der Ausbau der Waben während der Wiederherstellung der Kompaktheit des Nestes dauert 12 bis 13 Tage Hierdurch werden innerhalb von 120 Tagen der Trachtperiode 9 Erweiterungen des Nestes vorgenommen. Das Bienenvolk baut 9 Etagen der Rähmchen mit leeren Honigwaben aus und produziert 1,96 kg Wachs. Am Ende der aktiven Lebenstätigkeit wird der Bienenschwarm mit zusätzlichem Futter in Form von Zuckersirup als Futtervorrat für die Überwinterung versorgt. Da für die Überwinterung drei Etagen der Rähmchen gebraucht werden, die die Bienen jedoch 9 Etagen ausbauten, beträgt die Austauschbarkeit der Nestwaben ungefähr 300%. Die Waben der entfernten Etagen werden zu Warenwachs verarbeitet. Man erhält etwa 3,9 kg.

**Beispiel 3**

Bin Bienenschwarm wird unter klimatischen Witterungsbedingungen gehalten, bei welchen die Trachtbedingungen bei einer Dauer der Trachtperiode von 120 Tagen dermaßen ungünstig sind, daß sie lediglich die Aufrechterhaltung des Bienenschwarmes bewirken. Ein Ernteertrag für die Überwinterung sowie für die Gewinnung des Warenhonigs ist nicht gewährleistet. Die metereologischen Bedingungen innerhalb von 15 Tagen der Trachtperiode gewährleisten nicht die Aufrechterhaltung des Bienenschwarmes. Für die Haltung des Bienenschwarmes werden Rähmchen eingesetzt, deren Wabenfläche jeweils der folgenden Formel

$$S = \frac{3000}{Z}$$

entspricht,

und die das einmalige Erweitern des Bienenestes um 0,3 Teile seines Umfanges bewirken.

Der Bienenschwarm besetzt nach der Überwinterung an solchen Rähmchen ein Nest, das sich aus drei Etagen zusammensetzt. Zum Ausfüllen der Rähmchen einer solchen Etage werden 0,2 kg leere Honigwaben gebraucht. Nach dem Ausbau der neuen Waben beträgt das Gesamtgewicht der Waben einer Etage 0,4 kg. Der Ausbau der Waben während der Wiederherstellung der Kompaktheit des Nestes dauert 10 Tage. Vom Anfang der Trachtperiode an wird ein regelmäßiges Erweitern des Nestes vorgenommen.

In 25 Tagen nach dem Beginn der Trachtperiode ist es kälter geworden (die durchschnittliche Temperatur innerhalb von 24 Stunden wurde um 10°C niedriger). Es gab 15 Tage Regenwetter. In dieser Zeit verfüttern die Bienen den Futtervorrat im Nest. Es wird keine Zerstörungen seiner Kompaktheit vorgenommen, da die Kompaktheit des Nestes nach dem dritten regelmäßigen Erweitern nicht wiederhergestellt wurde. Nach Besserung der metereologischen Bedingungen zum 41. Tag seit Beginn der Trachtperiode stellen die Bienen zum 45. Tag der Trachtperiode die Kompaktheit des Nestes wieder her. Danach wird das regelmäßige Erweitern des Nestes in seinem zetralen Teil fortgesetzt. Zu Beginn der Versorgung der Bienen mit Futtervorräten werden noch 6 weitere regelmäßige Erweiterungen vorgenommen. Die Einführung zusätzlicher Rähmchen mit leeren Honigwaben zwischen den getrennten Teilen des Brutraumes wird fortgesetzt.

Somit bauen die Bienen innerhalb der Trachtperiode 9 Etagen der Rähmchen mit leeren Honigwaben aus und sondern 1,8 kg Wachs zur Wiederherstellung der Kompaktheit des Nestes ab.

Da für die Überwinterung drei Etagen der Rähmchen gebraucht werden, und die Bienen 9 Etagen ausgebaut haben, beträgt die Austauschbarkeit der Waben etwa 300%. Die Waben der entfernten Etagen werden zu Warenwachs verarbeitet. Man erhält etwa 3,6 kg.

## Beispiel 4

Ein Bienenschwarm wird unter klimatischen Witterungsbedingungen gehalten, bei welchen bei einer Dauer der Trachtperiode von 120 Tagen in ihrer ersten Hälfte eine normale Entwicklung des Bienenschwarmes gesichert wird, und zu Beginn der zweiten Hälfte der Trachtperiode die Honigernte für die Überwinterung und für die Gewinnung von Warenhonig gewährleistet wird. Für die Haltung des Bienenschwarms werden Rähmchen eingesetzt, deren Wabenfläche jeweils folgender Formel

$$S = \frac{3000}{Z}$$

entspricht,

und die das einmalige Erweitern des Bienenestes um 0,3 Teile seines Umfanges gewährleisten.

An solchen Rähmchen besetzt der Bienenschwarm ein Nest, das sich aus drei Etagen zusammensetzt. Zum Ausfüllen der Rähmchen einer solchen Etage mit Wachs werden 0,2 kg Wachs gebraucht. Nach dem Ausbau der neuen Waben beträgt das Gesamtgewicht der Waben einer Etage 0,4 kg. Der Ausbau der Waben während der Wiederherstellung der Kompaktheit des Nestes dauert 10 Tage. Die Waben einer solchen Etage nehmen etwa 9 kg Honig auf.

Seit Beginn der Trachtperiode werden ein regelmäßiges Erweitern des Nestes in seinem zentralen Teil mit Trennung des Brutraumes in zwei Teile und eine Einführung zusätzlicher Rähmchen mit leeren Honigwaben in das Nest vorgenommen.

Nach der fünften regelmäßigen Erweiterung ungefähr in 50 Tagen seit Beginn der Trachtperiode erreicht der Bienenschwarm seine maximale Kraft. Das Gewicht des Nestes vergrößert durch den Honig und das Wachs. Während der vierten und fünften Erweiterung wird je eine Etage der Waben aus dem unteren Teil des Bienenstockes entfernt.

Zu dieser Zeit übersteigt die Zunahme der Anzeige der Kontrollwaage alle 10 Tage 9 kg nicht. Zu gleicher Zeit mit dem sechsten Erweitern des Bienennestes im zentralen Teil des Brutraumes beginnt die Haupthonigernte. Der Zuwachs der Anzeige der Kontrollwaage bis zu einer Größe von 9 kg wird innerhalb von drei Tagen erreicht. Danach wirde das zusätzliche Erweitern des Nestes mit Hilfe einer Etage von Rähmchen mit leeren Honigwaben unmittelbar über dem Niveau des Brutraumes vorgenommen. Die Honigernte dauert 20 Tage. In dieser Zeit werden 6 zusätzliche Erweiterungen über dem Niveau des Brutraumes und zwei Erweiterungen im Zentralenteil des Brutraumes vorgenommen. Bei der Vorbereitung auf die Überwinterung werden vom Neste alle Etagen mit Honigwaben entfernt. Der Bienenschwarm wird mit Futter für die Überwinterung versorgt.

Innerhalb der ganzen Trachtperiode werden 12 Erweiterungen im zentralen Teil des Brutraumes und sechs zusätzliche Erweiterungen unmittelbar über dem Niveau des Brutraumes vorgenommen. Von dem Bienenstock werden 8 Etagen von Honigwaben abgenommen.

Während der Trachtperiode hat der Bienenschwarm insgesamt 18 Etagen von Rähmchen ausgebaut, hierfür 3,6 kg Wachs abgesondert und 72 kg Warenhonig erzeugt. Da für die Überwinterung drei Etagen von Rähmchen gebraucht werden und die Bienen 18 Etagen ausgebaut haben, beträgt die Austauschbarkeit der Waben etwa 600%. Die Waben der entfernten Etagen werden zu Warenwachs verarbeitet. Man erhält 7,2 kg.

**Patentansprüche**

1. Verfahren zur Bienenhaltung, das die frühjahrsmäßige Herausbildung eines Bienenschwarmes an Rähmchen mit leeren Honigwaben zur Erhaltung einer Brut und das mehrmalige Erweitern des Brutraumes des Bienenschwarmes in der Zeit der Honigernte mittels Einführung von zusätzlichen Rähmchen mit leeren Honigwaben vorsieht, **dadurch gekennzeichnet**, daß vor der Einführung der zusätzlichen Rähmchen mit leeren Honigwaben in den Bienenschwarm die Brut gleichzeitig am allen Waben in ihrem zentralen Teil längs der Vertikalen in zwei Teile getrennt wird und die zusätzlichen Rähmchen mit leeren Honigwaben zwischen den getrennten Teilen der Brut eingeführt werden, wobei jedes einzelne Erweitern des Brutraums des Bienenschwarmes 0,25 bis 0,35 Teile des Gesamtumfanges des Brutnestes beträgt.

**Claims**

1. A method of beekeeping which provides both the formation in spring of a bee colony on frames with empty honeycombs to obtain a brood and the repeated widening of the brood chamber of the bee colony in the period of the honey harvest by means of the introduction of additional frames with empty honeycombs, characterized in that prior to the introduction of the additional frames with empty honeycombs into the bee colony, the brood coexisting on all honeycombs is in its central part separated along the vertical into two parts and the additional frames with empty honeycombs are inserted between the separated parts of the brood, each individual widening of the brood chamber of the bee colony amounting to 0.25 to 0.35 parts of the total circumference of the brood nest.

**Revendications**

1. Procédé d'élevage d'abeilles, dans lequel on prévoit la formation au printemps d'un essaim d'abeilles sur des petits cadres avec des rayons de miel vides en vue de l'obtention d'un couvain ainsi que l'agrandissement à plusieurs reprises de l'espace de couvain de l'essaim d'abeilles à l'époque de la récolte du miel au moyen de l'introduction de petits cadres supplémentaires avec des rayons de miel vides, caractérisé en ce qu'avant l'insertion des petits cadres supplémentaires avec des rayons de miel vides dans l'essaim d'abeilles, on sépare le couvain en même temps à tous les rayons dans leur partie centrale le long de la verticale en deux parties, et en ce que les petits cadres supplémentaires avec les rayons de miel vides sont insérés entre les parties séparées du couvain, chaque élargissement individuel de l'espace de couvain de l'essaim d'abeilles constituant 0,25 à 0,35 part de l'étendue totale du nid de couvaison.